# EUROPEAN PATENT SPECIFICATION

(11) **EP 2 977 229 B1**
(45) Date of publication and mention of the grant of the patent: **10.05.2017**
(21) Application number: 15176206.9
(22) Date of filing: 10.07.2015
(51) Int. Cl.: B60C 9/26, B60C 9/20, B60C 9/00

(54) **REDUCED WEIGHT AIRCRAFT TIRE**
FLUGZEUGREIFEN MIT REDUZIERTEM GEWICHT
PNEU D'AÉRONEF À POIDS RÉDUIT

(30) Priority: 22.07.2014 US 201462027278 P; 22.06.2015 US 201514745625
(43) Date of publication of application: 27.01.2016
(73) Proprietor: The Goodyear Tire & Rubber Company, Akron, Ohio 44316 (US)
(72) Inventor: KMIECIK, Frank Anthony, Akron, OH 44313 (US); REITER, Leonard James, Norton, OH 44203 (US)
(74) Representative: Kutsch, Bernd

(56) References cited:
- EP-A1- 0 540 303

## Description

### Field of the Invention

This invention relates to pneumatic tires having a carcass and a belt reinforcing structure, more particularly to high speed heavy load tires such as those used on aircraft.

### Background of the Invention

Pneumatic tires for high speed applications experience a high degree of flexure in the crown area of the tire as the tire enters and leaves the area of the footprint. This problem is particularly exacerbated on aircraft tires wherein the tires can reach speed of over 320 km/h at takeoff and landing.

When a tire spins at very high speeds the crown area tends to grow in dimension due to the high angular accelerations and velocity, tending to pull the tread area radially outwardly. Counteracting these forces is the load of the vehicle which is only supported in the small area of the tire known as the footprint area.

Current tire design drivers are an aircraft tire capable of high speed, high load and with reduced weight. It is known in the prior art to use zigzag belt layers in aircraft tires, such as disclosed in US-A-5,427,167. Zigzag belt layers have the advantage of eliminating cut belt edges at the outer lateral edge of the belt package. The inherent flexibility of the zigzag belt layers also helps to improve cornering forces. However, a tire designed with zigzag belt layers may result in too many layers at the belt edges which may reduce durability. Further, there is generally a tradeoff between load capacity and weight. Thus an improved aircraft tire is needed, which is capable of meeting high speed, high load and with reduced weight.

### Summary of the Invention

The invention relates to a tire in accordance with claims 1 or 14 respectively.

Dependent claims refer to preferred embodiments of the invention.

### Definitions

"Circumferential" means lines or directions extending along the perimeter of the surface of the annular tread perpendicular to the axial direction.

"Cord" means one of the reinforcement strands which the plies in the tire comprise.

"Equatorial plane (EP)" means the plane perpendicular to the tire's axis of rotation and passing through the center of its tread.

"Ply" means a preferably continuous layer of rubber-coated parallel cords.

"Radial" and "radially" mean directions radially toward or away from the axis of rotation of the tire.

"Radial-ply tire" means a belted or circumferentially-restricted pneumatic tire in which the ply cords which extend from bead to bead are laid at cord angles between 65° and 90° with respect to the equatorial plane of the tire.

"Section width" is the distance between a tire's sidewalls measured at the widest part of the tire when inflated to rated pressure and not under load.

"Zigzag belt reinforcing structure" means at least two layers of cords or a ribbon of parallel cords typically having 1 to 20 cords in each ribbon and laid up in an alternating pattern extending at an angle between 5° and 30° between lateral edges of the belt layers.

### Brief Description of the Drawings

FIG. 1 is a schematic cross-sectional view of a first embodiment of half of a tire according to the invention;
FIG. 2 is a schematic perspective view of a zigzag belt layer in the middle of the formation;
FIG. 3 is a schematically enlarged cross-sectional view of a first embodiment of half of a composite belt package for a tire showing the belt layer configuration; and
FIG. 4 is a schematically enlarged cross-sectional view of a second embodiment of a composite belt package showing the belt layer configuration.

### Detailed Description of Example Embodiments of the Invention

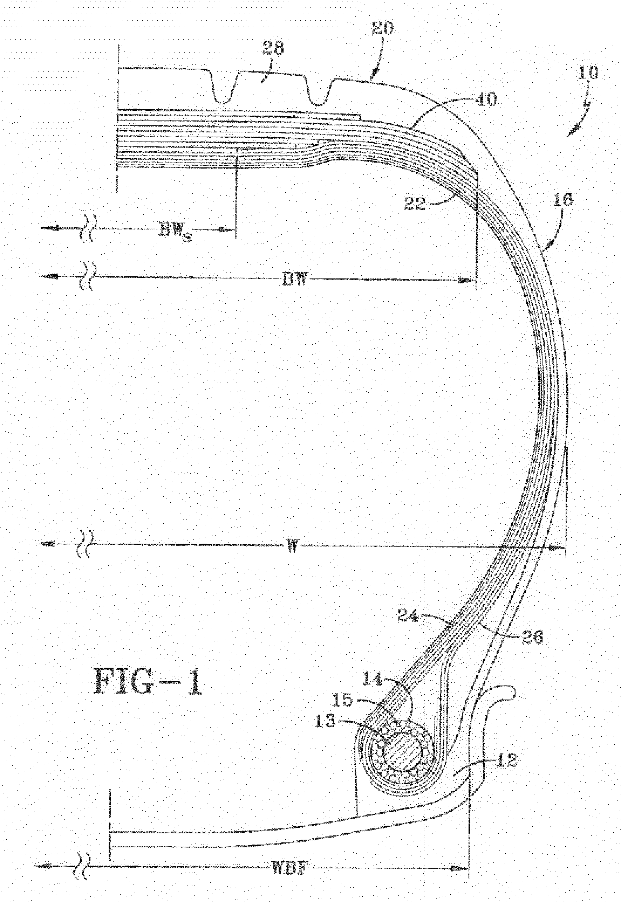

Figure 1 illustrates a cross-sectional view of one half of a radial aircraft tire 10 of the present invention. The tire is symmetrical about the mid-circumferential plane so that only one half is illustrated. As shown, the aircraft tire comprises a pair of bead portions 12 each containing a bead core 14 embedded therein. One example of a bead core suitable for use in an aircraft tire is shown in US-B-6,571,847. The bead core 14 preferably has an aluminum, aluminum alloy or other light weight alloy in the center portion 13 surrounded by a plurality of steel sheath wires 15. A person skilled in the art may appreciate that other bead cores may also be utilized.

The aircraft tire further comprises a sidewall portion 16 extending substantially outward from each of the bead portions 12 in the radial direction of the tire, and a tread portion 20 extending between the radially outer ends of the sidewall portions 16. The tire is shown mounted on a rim flange having a rim flange width extending from one bead to the other bead and indicated as W_{BF} in Figure 1. The section width of the tire is indicated in Figure 1 as W and is the cross-sectional width of the tire at the widest part when inflated to normal pressure and not under load. Furthermore, the tire 10 is reinforced with a carcass 22 toroidally extending from one of the bead portions 12 to the other bead portion 12. The carcass 22 is comprised of inner carcass plies 24 and outer carcass plies 26, preferably oriented in the radial direction. Among these carcass plies, typically four inner plies 24 are wound around the bead core 14 from inside of the tire toward outside thereof to form turnup portions, while typically two outer plies 26 are extended downward to the bead core 14 along the outside of the turnup portion of the inner carcass ply 24.

The aircraft is preferably an H type tire having a ratio of W_{BF}/W in the range of from 0.65 to 0.7, and more preferably in a range of from 0.65 to 0.68.

Each of these carcass plies 24, 26 comprises a suitable cord, typically nylon cords such as nylon-6,6 cords extending substantially perpendicular to an equatorial plane EP of the tire (i. e. extending in the radial direction of the tire). Preferably, the nylon cords have an 1890 denier/2/2 or 1890 denier/3 construction. One or more of the carcass plies 24, 26 may also comprise an aramid and nylon cord structure, for example, a hybrid cord, a high energy cord or a merged cord. Examples of suitable cords are described in US-A-4,893,665, US-A-4,155,394 or US-B-6,799,618. The ply preferably have a percent elongation at break greater than 8% and less than 30%, and more preferably greater than 9% and less than 28%.

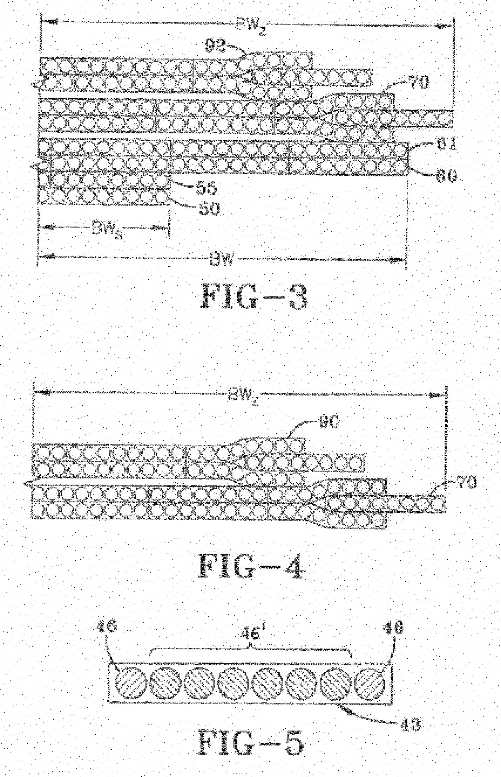

The aircraft tire 10 further comprises a belt package 40 arranged between the carcass 22 and the tread rubber 28. Figure 3 illustrates a first embodiment of one half of a belt package 40 suitable for use in the aircraft tire. The belt package 40 is symmetrical about the mid-circumferential plane so that only one half of the belt package is illustrated. The belt package 40 as shown comprises a first belt layer 50 located adjacent the carcass. The first belt layer 50 is preferably formed of reinforcement cords forming an angle of 10 degrees or less with respect to the mid-circumferential plane, and more preferably, 5 degrees or less. Preferably, the first belt layer 50 is formed of a rubberized strip 41 of two or more cords made by spirally or helically winding the cords relative to the circumferential direction. The first belt layer 50 is the narrowest belt structure of the belt package 40, and has a width in the range of from 13% to 100% of the rim width (width between flanges).

The belt package 40 further comprises a second belt layer 55 located radially outward of the first belt layer 50. The second belt layer 55 is preferably formed of cords having an angle of 10 degrees or less with respect to the mid-circumferential plane. Preferably, the second belt layer 55 is formed of a rubberized strip 41 of two or more cords made by spirally or helically winding the cords relative to the circumferential direction. The second belt layer has a width in the range of from 13 % to 100% of the rim width. Preferably, the second belt layer 55 has a width the same or slightly greater than the first belt layer 50. The belt package 40 may further comprise a third belt layer 60 and a fourth belt layer 61. The third belt layer 60 is located radially outward of the second belt layer 55, and may be substantially wider than the second belt layer. The fourth belt layer is located radially outward of the third belt layer 60, and may be the same width as the third belt layer 60 or slightly wider. The third and fourth belt layers 60, 61 are low angle belts, typically with a belt angle of 10 degrees or less with respect to the mid-circumferential plane. Preferably, the third and fourth belt layers 60, 61 are formed of a rubberized strip 41 of two or more cords made by spirally or helically winding the cords relative to the circumferential direction.

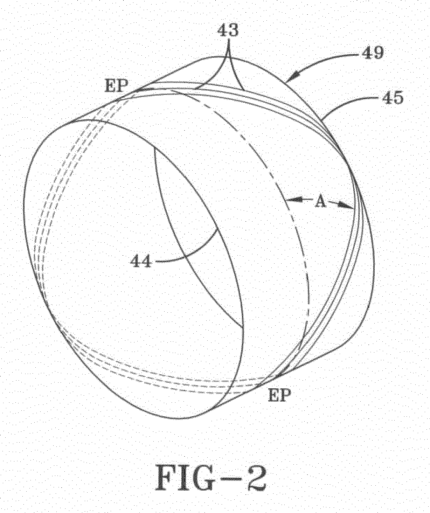

The belt package 40 further comprises at least one zigzag belt reinforcing structure 70. The zigzag belt reinforcing structure 70 comprises two layers of cord interwoven together formed as shown in Figure 2. The zigzag belt structure 70 is formed from a rubberized composite strip 43 of two or more cords. The composite strip 43 is shown in Figure 5 and described in more detail, below. The composite strip 43 is wound generally in the circumferential direction to extend between alternating lateral edges 44 and 45 of a tire building drum 49 or core. The strip is wound along such zigzag path many times while the strip 43 is shifted a desired amount in the circumferential direction so as not to form a gap between the adjoining strips 43. As a result, the cords extend in the circumferential direction while changing the bending direction at a turnaround point at both ends 44, 45. The cords of the zigzag belt structure cross with each other, typically at a cord angle A of 5 degrees to 30 degrees with respect to the equatorial plane EP of the tire when the strip 43 is reciprocated at least once between both side ends 44 and 45 of the ply within every 360 degrees of the circumference as mentioned above. The two layers of cords formed in each zigzag belt structure are embedded and inseparable in the belt layer and wherein there are no cut ends at the outer lateral ends of the belt.

In order to reduce the number of overlapping strips at the belt edges, it is preferred that the amplitude or width of the zigzag belt winding be varied. Generally, a zigzag belt is formed to have a constant amplitude or width. In order to reduce the number of layers at the belt edges, the amplitude (distance from the drum center to the axial end of the drum) of the zigzag can be varied. The amplitude can be varied randomly, or it can be carried by a pattern. In one example, a first zigzag winding on the drum has a first winding pattern of W1W2, wherein W1 is a first amplitude, and W2 is a second amplitude which immediately follows the first amplitude, wherein W1 is not equal to W2. A second winding is overlayed on the first winding, and has a second winding pattern of W2W1. Each winding pattern is repeated as often as necessary to complete the winding on the drum.

The composite strip 43 is shown in Figure 5, may be used to form any of the above described belt structures, and is preferably used to form at least one of the zigzag belt structures. More preferably, the composite strip is used to form all of the zigzag belt structures. The composite strip 43 is formed of at least two types of reinforcement cords 46', 46. In one embodiment, the first cord reinforcement 46' has a higher modulus than the second cord reinforcement 46. In one embodiment, the first cord reinforcement 46' has a modulus at least 2 times or even at least 10 times higher than the second cord reinforcement 46. Preferably, the composite strip has at least two higher modulus reinforcement cords 46' located laterally inward on the strip, and at least two lower modulus reinforcement cords. The lower modulus reinforcement cords 46 are preferably located on the lateral outer ends of the composite strip. Figure 5 illustrates a cross-sectional view of an exemplary composite strip. In this example, there are 8 total reinforcement cords arranged in parallel relationship to each other. The composite strip 43 has a lower modulus cord reinforcement 46 located on each lateral edge of the strip. There could also be four outer reinforcement cords 46, with two reinforcement cords 46 located at each lateral edge. The composite strip 43 as shown in Figure 5 has six higher modulus reinforcement cords 46' located laterally inward of the lower modulus reinforcement cords 46. In alternative embodiments, the composite strip may have 1 to 4, preferably 1 or 2, laterally outer reinforcement cords 46 on each lateral edge of the strip together with 1 to 10 inner cords 46' such as 2, 6 or 8.

The lower modulus reinforcement cords 46 may be formed of any desired materials, such as nylon or nylon 6,6. The inner reinforcement cords 46' may be formed of any higher modulus material such as aramid, POK or a merged or hybrid cord made of aramid and nylon. One example of a suitable cord construction comprise a composite of aramid and nylon, containing two cords of a polyamide (aramid) with construction of 3300 dtex with a 6.7 twist, and one nylon or nylon 6/6 cord having a construction of 1880 dtex, with a 4.5 twist. The overall merged cable twist is 6.7. Preferably, the belt cords have an elongation at break greater than 8% and less than 26% and break strength greater than 400N. More preferably, the belt cords have an elongation at break in the range of 9% to 25%.

Figure 4 illustrates a second embodiment of the present invention. The second embodiment includes a first and second zigzag belt structure 80, 90. The second zigzag belt structure 90 is located radially outward of the first zigzag belt structure 80. The second zigzag belt structure 90 has a width less than the first zigzag belt structure 80.

It is additionally preferred that the ply cords have a greater elongation at break than the belt cords elongation at break. The cord properties such as percent elongation at break, linear density and tensile strength are determined from cord samples taken after being dipped but prior to vulcanization of the tire.

## Claims

1. A pneumatic tire having a carcass (22) and a belt reinforcing structure (40), the belt reinforcing structure (40) comprising a reinforcement strip (43) comprising at least two reinforcement cords (44, 46) aligned in parallel relationship, wherein a second cord (44) is located next to a first cord (46) **characterized in that** the second cord is made of a different material than the first cord.

2. The pneumatic tire of claim 1 wherein the belt reinforcing structure (40) comprises a zigzag belt reinforcing structure (70) formed of said reinforcement strip (43), the reinforcement strip being inclined at 5 to 30 degrees relative to the centerplane of the tire (10) extending in alternation to turnaround points at each lateral edge.

3. The tire of claim 2 wherein the reinforcement strip (43) is formed of the first cord and the second cord.

4. The pneumatic tire of claim 1, 2 or 3 wherein the reinforcement strip (43) comprises at least three reinforcement cords (44, 46) aligned in parallel relationship, wherein the second cord is located between the first cord and a third cord and wherein the second cord is made of a different material than the first cord and the third cord.

5. The pneumatic tire of at least one of the previous claims wherein the first cord (46) and/or the third cord are made of nylon.

6. The pneumatic tire of at least one of the previous claims wherein the second cord (44) is made of aramid.

7. The pneumatic tire of at least one of the previous claims wherein the second cord (44) is made of a blend of aramid and nylon or is made of a merged cord.

8. The pneumatic tire of at least one of the previous claims wherein the reinforcement strip (43) comprises at least 4 or at least 6 inner reinforcement cords (44) and at least two or at least four outer cords (46) aligned in parallel relationship, wherein the outer cords (46) are positioned at the lateral ends of the strip (43) and are made of a different material than the inner cords (44).

9. The pneumatic tire of claim 8 wherein the outer cords (46) are made of nylon.

10. The pneumatic tire of claim 8 or 9 wherein the inner cords (44) are made of aramid or of a blend of aramid and nylon.

11. The pneumatic tire of claim 8 or 10 wherein the inner cords (44) are made of a higher modulus at 80% load than the inner cord at 80% load.

12. The pneumatic tire of claim 1 or 8 wherein the reinforcement strip (43) is wound in a zigzag manner to form a zigzag belt.

13. The pneumatic tire of at least one of the previous claims wherein the tire (10) is an aircraft tire or an H type aircraft tire.

14. A pneumatic tire having a carcass (22) and a belt reinforcing structure (40), the belt reinforcing structure (40) comprising a zigzag belt reinforcing structure (70) being formed of two layers of a reinforcement strip (43) having a first and second reinforcement cord (44, 46), said reinforcement strip (43) being inclined at 5 to 30 degrees relative to the centerplane of the tire (10) extending in alternation to turnaround points at each lateral edge, **characterized in that** the first reinforcement cord (46) has a different modulus than the second reinforcement cord (44).

15. The pneumatic tire of claim 14 wherein the tire (10) is an aircraft tire or an H type aircraft tire.

## Patentansprüche

1. Luftreifen mit einer Karkasse (22) und einer Gürtelverstärkungsstruktur (40), wobei die Gürtelverstärkungsstruktur (40) einen Verstärkungsstreifen (43) umfasst, welcher mindestens zwei Verstärkungskorde (44, 46) umfasst, die in parallelem Verhältnis zueinander ausgerichtet sind, wobei ein zweiter Kord (44) sich dicht bei einem ersten Kord (46) befindet, **dadurch gekennzeichnet, dass** der zweite Kord aus einem anderen Material hergestellt ist als der erste Kord.

2. Luftreifen nach Anspruch 1, wobei die Gürtelverstärkungsstruktur (40) eine Zickzack-Gürtelverstärkungsstruktur (70) umfasst, die aus dem Verstärkungsstreifen (43) gebildet ist, wobei der Verstärkungsstreifen in Bezug auf die Mittelebene des Reifens (10) mit 5 bis 30 Grad geneigt ist, wobei er sich abwechselnd zu Umkehrpunkten an jedem Seitenrand erstreckt.

3. Reifen nach Anspruch 2, wobei der Verstärkungsstreifen (43) aus dem ersten Kord und dem zweiten Kord gebildet ist.

4. Luftreifen nach Anspruch 1, 2 oder 3, wobei der Verstärkungsstreifen (43) mindestens drei Verstärkungskorde (44, 46) umfasst, die in parallelem Verhältnis zueinander ausgerichtet sind, wobei der zweite Kord sich zwischen dem ersten Kord und einem dritten Kord befindet und wobei der zweite Kord aus einem anderen Material als der erste Kord und der dritte Kord hergestellt ist.

5. Luftreifen nach mindestens einem der vorhergehenden Ansprüche, wobei der erste Kord (46) und/oder der dritte Kord aus Nylon hergestellt sind.

6. Luftreifen nach mindestens einem der vorhergehenden Ansprüche, wobei der zweite Kord (44) aus Aramid hergestellt ist.

7. Luftreifen nach mindestens einem der vorhergehenden Ansprüche, wobei der zweite Kord (44) aus einem Gemisch von Aramid und Nylon hergestellt ist oder aus einem zusammengefügten Kord hergestellt ist.

8. Luftreifen nach mindestens einem der vorhergehenden Ansprüche, wobei der Verstärkungsstreifen (43) mindestens 4 oder mindestens 6 innere Verstärkungskorde (44) und mindestens zwei oder mindestens vier äußere Korde (46), die in parallelem Verhältnis zueinander ausgerichtet sind, umfasst, wobei die äußeren Korde (46) an den seitlichen Enden des Streifens (43) angeordnet sind und aus einem anderen Material als die inneren Korde (44) hergestellt sind.

9. Luftreifen nach Anspruch 8, wobei die äußeren Korde (46) aus Nylon hergestellt sind.

10. Luftreifen nach Anspruch 8 oder 9, wobei die inneren Korde (44) aus Aramid oder aus einem Gemisch von Aramid und Nylon hergestellt sind.

11. Luftreifen nach Anspruch 8 oder 10, wobei die inneren Korde (44) aus einem höheren Modul bei 80% Belastung als der innere Kord bei 80% Belastung hergestellt sind.

12. Luftreifen nach Anspruch 1 oder 8, wobei der Verstärkungsstreifen (43) zickzackförmig gewickelt ist, um einen Zickzackgürtel zu bilden.

13. Luftreifen nach mindestens einem der vorhergehenden Ansprüche, wobei der Reifen (10) ein Flugzeugreifen oder ein Flugzeugreifen vom Typ H ist.

14. Luftreifen mit einer Karkasse (22) und einer Gürtelverstärkungsstruktur (40), wobei die Gürtelverstärkungsstruktur (40) eine Zickzack-Gürtelverstärkungsstruktur (70) umfasst, die aus zwei Lagen eines Verstärkungsstreifens (43) mit einem ersten und einem zweiten Verstärkungskord (44, 46) gebildet ist, wobei der Verstärkungsstreifen (43) in Bezug auf die Mittelebene des Reifens (10) mit 5 bis 30 Grad geneigt ist, wobei er sich abwechselnd zu Umkehrpunkten an jedem Seitenrand erstreckt, **dadurch gekennzeichnet, dass** der erste Verstärkungskord (46) einen anderen Modul aufweist als der zweite Verstärkungskord (44).

15. Luftreifen nach Anspruch 14, wobei der Reifen (10) ein Flugzeugreifen oder ein Flugzeugreifen vom Typ H ist.

## Revendications

1. Bandage pneumatique possédant une carcasse (22) et une structure de renforcement de ceinture (40), la structure de renforcement de ceinture (40) comprenant une bande de renforcement (43) comprenant au moins deux câblés de renforcement (44, 46) alignés parallèlement l'un à l'autre, dans lequel en ce qu'un câblé (44) est disposé à côté d'un premier câblé (46), **caractérisé en ce que** le deuxième câblé est constitué d'une matière différente de celle du premier câblé.

2. Bandage pneumatique selon la revendication 1, dans lequel la structure de renforcement de ceinture (40) comprend une structure de renforcement de ceinture en zigzag (70) constituée de ladite bande de renforcement (43), la bande de renforcement étant inclinée en formant un angle de 5 à 30° par rapport au plan central du bandage pneumatique (10), en s'étendant en alternance jusqu'à des points de demi-tour à chaque bord latéral.

3. Bandage pneumatique selon la revendication 2, dans lequel la bande de renforcement (43) est constituée par le premier câblé et par le deuxième câblé.

4. Bandage pneumatique selon la revendication 1, 2 ou 3, dans lequel la bande de renforcement (43) comprend au moins trois câblés de renforcement (44, 46) alignés parallèlement les uns aux autres, dans lequel le deuxième câblé est disposé entre le premier câblé et un troisième câblé, et dans lequel le deuxième câblé est constitué d'une matière différente de celle du premier câblé et du troisième câblé.

5. Bandage pneumatique selon au moins une des revendications précédentes, dans lequel le premier câblé (46) et/ou le troisième câblé sont réalisés en nylon.

6. Bandage pneumatique selon au moins une des revendications précédentes, dans lequel le deuxième câblé (44) est réalisé en aramide.

7. Bandage pneumatique selon au moins une des revendications précédentes, dans lequel le deuxième câblé (44) est réalisé à partir d'un mélange d'aramide et de nylon ou bien est constitué d'un câblé obtenu par fusion.

8. Bandage pneumatique selon au moins une des revendications précédentes, dans lequel la bande de renforcement (43) comprend au moins quatre ou au moins six câblés de renforcement internes (44) et au moins deux ou au moins quatre câblés externes (46) disposés en alignement les uns par rapport aux autres, les câblés externes (46) étant disposés aux extrémités latérales de la bande (43) et étant constitués d'une matière différente de celle des câblés internes (44).

9. Bandage pneumatique selon la revendication 8, dans lequel les câblés externes (46) sont réalisés en nylon.

10. Bandage pneumatique selon la revendication 8 ou 9, dans lequel les câblés internes (44) sont réalisés en aramide ou à partir d'un mélange d'aramide et de nylon.

11. Bandage pneumatique selon la revendication 8 ou 10, dans lequel les câblés internes (44) sont réalisés avec un module supérieur à une charge de 80 % par rapport au câblé interne à une charge de 80%.

12. Bandage pneumatique selon la revendication 1 ou 8, dans lequel la bande de renforcement (43) est enroulée en zigzag pour obtenir une ceinture en zigzag.

13. Bandage pneumatique selon au moins une des revendications précédentes, dans lequel le bandage pneumatique (10) est un bandage pneumatique pour aéroplane ou un bandage pneumatique pour aéroplane de type H.

14. Bandage pneumatique possédant une carcasse (22) et une structure de renforcement de ceinture (40), la structure de renforcement de ceinture (40) comprenant une structure de renforcement de ceinture en zigzag (70) constituée par deux couches d'une bande de renforcement (43) possédant un premier et un deuxième câblé de renforcement (44, 46), ladite bande de renforcement (43) étant inclinée en formant un angle de 5 à 30° par rapport au plan central du bandage pneumatique (10) en s'étendant en alternance jusqu'à des points de demi-tour à chaque bord latéral, **caractérisé en ce que** le premier câblé de renforcement (46) possède un module différent de celui du deuxième câblé de renforcement (44).

15. Bandage pneumatique selon la revendication 14, dans lequel le bandage pneumatique (10) est un bandage pneumatique pour aéroplane ou un bandage pneumatique pour aéroplane de type H.
